# EUROPEAN PATENT APPLICATION

(11) **EP 0 993 132 A1**
(43) Date of publication of application: **12.04.2000**
(21) Application number: 98308161.3
(22) Date of filing: 07.10.1998
(51) Int. Cl.: H04B 7/185

(54) **Call termination procedure in mobile satellite communication system**

(71) Applicant: ICO Services Ltd., London W6 9BN (GB)
(72) Inventor: Chin, Chen Ho, B-8540 -Deerlijk (BE)
(74) Representative: Musker, David Charles

(57) **Abstract**

A method of mobile communications between a mobile terminal end and a network end, in which a call is provided over a traffic channel and call signalling is provided over at least one signalling channel; characterised in that after one said end of the call generates a call termination signal to close said traffic channel, it immediately terminates its connection to said signalling channel.

## Description

### FIELD OF THE INVENTION

This invention relates to communications with a mobile user, and in particular to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications. In the GSM system, a short message service (SMS) is provided for transmitting short messages to mobile terminals.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

In such systems, it is not always possible to communicate with a mobile user, since the received signal strength at the mobile user terminal may be severely attenuated, for example by blockage or multi-path fading. Furthermore, the gain of the user terminal may be low, for example because the user terminal antenna is retracted or not deployed in the optimum position.

Further, the transmission power of a satellite is limited by the power supply available, such as the output power of solar cells of the satellite or by the battery power of the satellite during an eclipse.

The present applicants have proposed (GB 2319695) a satellite communications system having multiple penetration levels corresponding to different link margins. These may, for example, be achieved by providing multiple different power levels.

For example, normal voice and data channels have sufficient link margin to be received by a hand-held user terminal in operational position with its antenna deployed, in direct line of sight to a satellite, or with light shadowing or fading. This may be referred to as requiring nominal penetration (NP). In this case, the satellite transmits at a first power level.

Short messages and control channels, on the other hand, are transmitted by the satellite at a second, higher, power level, to give sufficient link margin to be received by a handheld user terminal in a non-operational position, such as in a suitcase and/or with its antenna retracted and/or with medium/light radio shadowing or fading. This may be referred to as requiring medium penetration (MP) and corresponds essentially to the single penetration level used in terrestrial communications such as GSM.

A high penetration (HP) notification is used to send information to the user terminal at a third, yet higher, level in situations where it may not be able to receive any other traffic, such as when the user terminal is inside a building, in heavy radio shadowing or fading from any of the satellites and with its antenna retracted. The link margin of a high penetration notification (HPN) gives sufficient penetration to allow reception and decoding of data by the user terminal in these circumstances.

In mobile communications systems such as GSM, in addition to the voice, data or message stream carried by the systems, there is a high volume of control signalling, for the purpose of allocating and re-allocating the channel used by the voice or data session, as well as for signalling user location, signal strength and many other matters (e.g. Radio Resource layer signalling). To carry these control signals, one or (more usually) several signalling channels are provided.

In such systems, when a mobile telephone is in "idle" mode, it attempts to receive a paging broadcast channel (termed BCCH in GSM). Where the network wishes to communicate with the mobile, to set up a call session, a paging signal, addressed for the mobile, is transmitted on the broadcast channel, and on allocation of a suitable control channel (a dedicated control channel such as the stand-alone dedicated control channel or SDCCH of GSM), the allocation is signalled to the mobile terminal and the network and mobile terminal can then enter into signalling dialogue on the channel, to set up a call session. This signalling channel, once established, is commonly referred to as a "radio resource" layer following the well known Open Systems Interconnection (OSI) layer model of the ITU.

Finally, a traffic channel (TCH of GSM) is allocated for carrying the voice or data, where a voice or data call is to take place, or (where a short message is to be transmitted) the message is transmitted on the allocated signalling channel.

After the call session or message is transmitted, the session is ended (and where a traffic channel has been allocated, the traffic allocation is ended). Subsequently, the radio resource signalling link is terminated, and the mobile returns to idle mode.

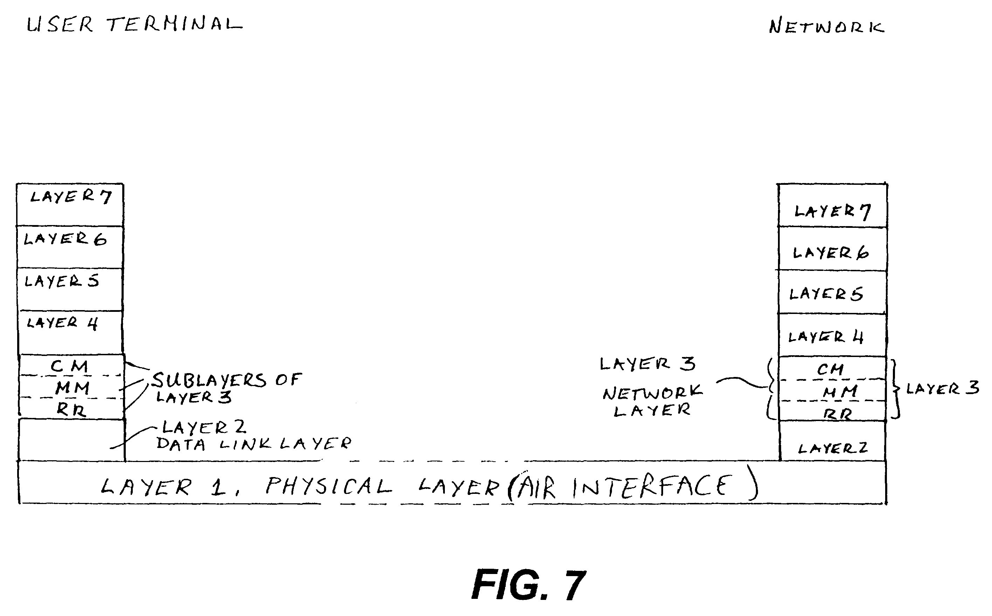

In the OSI model (illustrated in Figure 7) above the physical connection (layer 1, corresponding to air interface of a radio system) is the data link layer, at which low level data formatting is performed.

Above this is the network layer (layer 3). In radio mobile communications systems, layer 3 is notionally split into three sublayers; the radio resource (RR) sublayer (the lowest of the three), at which control signalling related to the radio path (e.g. handover signalling) is performed; the mobility management (MM) sublayer (for tracking the position of user terminal by transmitting position messages); and the call control or call management (CC) sublayer (the highest of the three sublayers), at which signalling for setting up and releasing a call is performed. analogously to the operation of a telephone network.

Above these are the transport layer (layer 4), the session layer (layer 5) the presentation layer (layer 6), and the application layer (layer 7), the functions of which well known and need not further be discussed.

The OSI model is widely used, in an effort to achieve interoperable systems. According to the model, a protocol stack for performing each of the layer is provided at each terminal end (e.g. mobile phone and base station). Each layers of the protocol stack at each end communicates with its peer layer at the other end by communication through the layers below.

Thus, when a call is set up, it is necessary to establish each layer before the layer above can be established, and, likewise, when clearing down a call, it is necessary to clear down the upper layers through the lower layers, so that the lower layers are cleared down last.

In greater detail, when the user returns the mobile terminal to the "on hook" state (finishing the call, so far as is concerned), the mobile terminal sends a DISCONNECT signal on the assigned control channel (equivalent to the main dedicated control channel of GSM), at nominal penetration, to the network, at which a RELEASE signal is transmitted back to the mobile, which answers with a RELEASE COMPLETE message.

At this point, the traffic channel TCH between the mobile terminal and the network is released. However, signalling continues on the signalling channel, (equivalent to the fast assigned control channel or FACCH of GSM) which operates at nominal penetration on the same physical channel as the TCH.

Having completed clearing down the call connection or call management sublayer, the mobility management and radio resource layers are then cleared by further protocol signalling exchanges still at nominal penetration.

In a terrestrial mobile communications network, the mobile terminal (cellular handset) communicates across a short radio path with a nearby base transceiver station (BTS). The BTS then communicates, via an electrical or optical trunk network, with the other end of the call. Each signal takes a few milliseconds (if that). The whole initial set up and clear down signalling process may take a few hundred milliseconds to a few seconds.

In a satellite mobile communications network, on the other hand, the mobile terminal communicates with an Earth station via a satellite relay. The radio path length is thus much longer, and each transmission from the mobile terminal to the ground station or vice versa will take at least several hundred milliseconds (depending on the position of the satellite in orbit).

The whole signalling process therefore takes significantly longer, and the time taken to clear down a call, whilst using protocols equivalent to those of terrestrial mobile communications system, will considerably exceed that of terrestrial mobile system.

Furthermore, both the available power and the available bandwidth are also severely constrained, so that the data rate achievable during signalling communications may be lower than in an equivalent terrestrial system.

A further and more serious problem, arises where multiple penetration levels are used. From the point of view of the user, the call is complete once the user signals to disconnect the call (e.g. to place the instrument in the "on hook" state by pressing an on-hook button), or once he hears that the other end of the call has been disconnected.

Accordingly, the user is likely to fold up the antenna, place the mobile terminal in a pocket or briefcase, and possibly walk away from an area of good reception. Thus, the mobile terminal moves to a state where successful communication at nominal penetration is unlikely, although medium penetration could be successful.

However, at this time, the signalling exchanges to close down the traffic channel (which occur using channel resources at nominal penetration but with terminals operating only at medium penetration) have only just begun. It is therefore likely that a satellite communications network especially one applying multiple penetration levels, which adopted GSM-like protocols for disconnection would not successfully complete them.

This poses no fundamental difficulty, because associated with each signalling exchange is a timer, so that if no reply to a give signal is received within a certain time, then some action is nonetheless taken. However, with an OSI-like model, where each layer is only disconnected following disconnection of the layer above, the relevant timers for each layer only begin to run following the expiry of those from the layer above.

Given the length of the satellite communication path, such timers must necessarily be set to substantial fractions of a second, or more. The total time before disconnection of the traffic and signalling channels finally occur will therefore be the sum of the lengths of all protocol timers, which will be on the order of a substantial number of seconds.

Taking these matters into consideration, the present invention provides a method of mobile communications between a mobile terminal end and a network end, in which a call is provided over a traffic channel and call signalling is provided over at least one signalling channel; characterised in that after one said end of the call generates a call termination signal to close said traffic channel, it immediately terminates its connection to said signalling channel.

The invention thus, importantly, reduces the length of time the satellite must transmit (and hence the average power required for each call) thus increasing the capacity of the satellite.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2 is a block diagram showing schematically the elements of mobile terminal equipment suitable for use with the present invention;
Figure 3 is a block diagram showing schematically the elements of an Earth station node forming part of the embodiment of Figure 1;
Figure 4 is a block diagram showing schematically the elements of a gateway station forming part of the embodiment of Figure 1;
Figure 5a illustrates schematically the beams produced by a satellite in the embodiment of Figure 1;
Figure 5b illustrates schematically the disposition of satellites forming part of Figure 1 in orbits around the earth;
Figure 6 is a flow diagram showing schematically the overall process of call setup and cleardown signalling;
Figure 7 is a diagram showing schematically the OSI layer model for a mobile radio system;
Figure 8 is a flow diagram showing schematically the process of call cleardown performed by the user terminal in an embodiment of the invention;
Figure 9 is a flow diagram showing schematically the process of call cleardown performed by the network end in an embodiment of the invention; and
Figure 10 corresponds to Figure 7 and illustrates the operation of the embodiment.

### GENERAL ASPECTS OF EMBODIMENTS

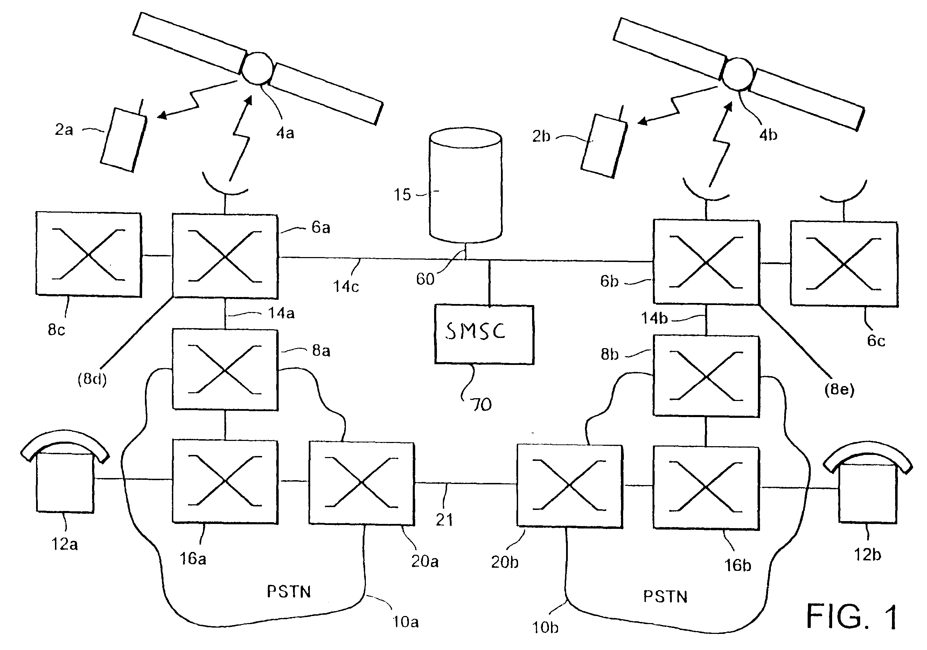

Referring to Figure 1, a satellite communications network according to this embodiment comprises mobile user terminal equipment 2a,2b (e.g. handsets 2a and 2b); orbiting relay satellites 4a,4b; satellite earth station nodes 6a,6b; satellite system gateway stations 8a,8b; terrestrial (e.g. public switched) telecommunications networks 10a,10b; and fixed telecommunications terminal equipment 12a,12b.

Interconnecting the satellite system gateways 8a,8b with the earth station nodes 6a,6b, and interconnecting the nodes 6a,6b with each other, is a dedicated ground-based network comprising channels 14a,14b,14c. The satellites 4, earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and earth stations 6.

The PSTNs 10a,10b comprise, typically, local exchanges 16a,16b to which the fixed terminal equipment 12a,12b is connected via local loops 18a,18b; and international switching centres 20a,20b connectable one to another via transnational links 21 (for example, satellite links or subsea optical fibre cable links). The PSTNs 10a,10b and fixed terminal equipment 12a,12b (e.g. telephone instruments)are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically,there is handover from one satellite 4 to another.

### Mobile terminal 2

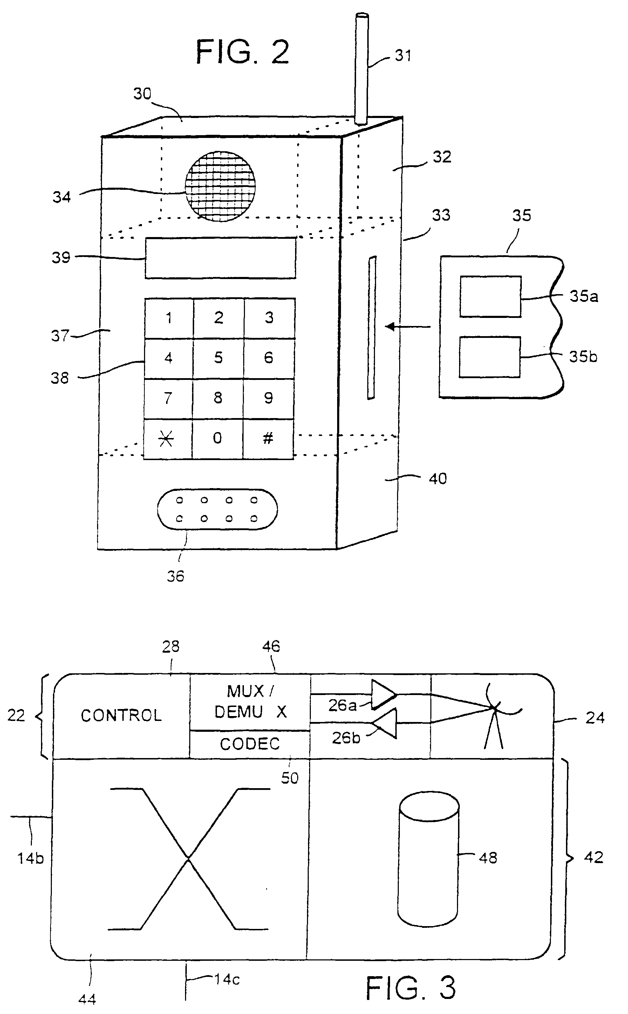

Referring to Figure 2, a mobile terminal handset equipment 2a of Figure 1 is shown.

Details of the handsets 2a,2b etc do not form part of the present invention, but they may comprise handsets similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Also provided is a control circuit 37 (which may in practice be integrated with the coder 30) consisting of a suitably programmed microprocessor, microcontroller or digital signal processor (DSP) chip.

### Earth Station Node 6

The earth station nodes 6 are arranged for communication with the satellites.

Each earth station node 6 comprises, as shown in Figure 3, a conventional satellite earth station 22 consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The earth station node 6 further comprises a mobile satellite switching centre 42 comprising a network switch 44 connected to the trunk links 14 forming part of the dedicated network. A multiplexer 46 is arranged to receive switched calls from the switch 44 and multiplex them into a composite signal for supply to the amplifier 26 via a low bit-rate voice codec 50. Finally, the earth station node 6 comprises a local store 48 storing details of each mobile terminal equipment 2a within the area served by the satellite 4 with which the node 6 is in communication.

### Gateway 8

The gateway stations 8a,8b comprise, in this embodiment, commercially available mobile switch centres (MSCs) of the type used in digital mobile cellular radio systems such as GSM systems

The gateway stations 8 comprise a switch arranged to interconnect incoming PSTN lines from the PSTN 10 with dedicated service lines 14 connected to one or more Earth station nodes 6.

### Database Station 15

The database station 15 comprises a digital data store, a signalling circuit, a processor interconnected with the signalling circuit and the store, and a signalling link interconnecting the database station 15 with the gateway stations 8 and Earth stations 6 making up satellite system network, for signalling or data message communications.

It stores data for terminal apparatus 2, for example position data, billing data, authentication data and so on, like the Home Location Register (HLR) of a GSM system.

### Satellites 4

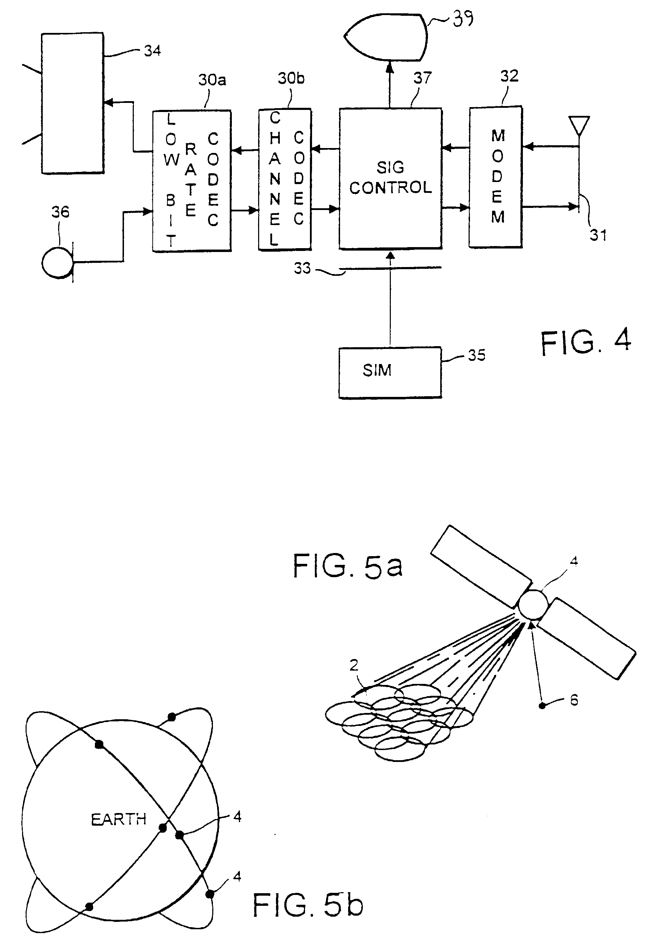

The satellites 4a,4b comprise generally conventional communications satellites such as the HS601 available from Hughes Aerospace Corp. California, US, and may be as disclosed in GB 2288913. Each satellite 4 is arranged to generate an array of beams covering a footprint beneath the satellite, each beam including a number of different frequency channels and time slots, as described in GB 2293725 and illustrated in Figure 5a.

On each beam, the satellite therefore transmits a set of downlink frequencies. The downlink frequencies on adjacent beams are different, so as to permit frequency re-use between beams. Each beam therefore acts somewhat in the manner of a cell of a conventional terrestrial cellular system. For example, there may be 61, 121 or 163 beams

In this embodiment each downlink frequency carries a plurality of time division channels, so that each mobile terminal 2 communicates on a channel comprising a given time slot in a given frequency.

Within each beam there is also provided a common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites 4a are arranged in a constellation in sufficient numbers and suitable orbits to cover a substantial area of the globe (preferably to give global coverage). For example 10 (or more) satellites may be provided in two mutually orthogonal intermediate circular orbits (or more) at an altitude of, for example, 10,500 kilometres (6 hour orbits) as shown in Figure 5b. Equally, however, larger numbers of lower satellites may be used, as disclosed in EP 0365885,or other publications relating to the Iridium system, for example.

### Call Set up and Clear Down

Initially, the mobile terminal 2a is not connected to the network, in the sense that no specific signalling or traffic channels are allocated to the mobile terminal. If the mobile terminal 2a is not switched off or in an area where reception is impossible, the mobile terminal will be in an idle mode, in which it monitors transmissions from the satellite 4a via the beam or beams within which it is located, on broadcast control channels equivalent to the BCCH (Broadcast System Information) GSM channel and the PCH (Broadcasting Paging Information) GSM Channel. If the mobile terminal 2a can receive control channels from more than one cell (i.e. beam), it makes signal strength and propagation time measurements from each.

The paging and control channel may each, for example, be a dedicated frequency for each beam, and/or a dedicated time slot on such a frequency.

The paging and control signals are transmitted at a medium penetration power level, which is sufficient to be received at an adequate signal to noise ratio by a handheld terminal 2a in which the antenna 31 is in the retracted condition, with the terminal 2a located in a briefcase.

Where the mobile terminal 2a is to be contacted to pass on a short message (e.g. a string of on the order 100 bytes of data representing alpha numeric characters), transmitted from a short message service centre (SMSC) 70, the SMSC 70 contacts the database station 15 to determined appropriate satellite earth station node 6a, based on the stored position data for the mobile terminal 2a stored at the database station 15, and signals to the selected satellite Earth station node 6a.

The Earth station node 6a generates a paging signal (as will be described in greater detail subsequently) in a step 100 and sends the paging signal on the paging broadcast channel (PCH) via the feeder uplink to the satellite 4a and the downlink beams transmitted therefrom, to the mobile terminal 2a.

The paging message includes an identification of the user terminal 2a (typically, a subscriber identification corresponding to data held on the subscriber identity module 35). The mobile terminal 2a ignores all paging messages other than those which correspond to this data.

On receipt of a valid paging message, the mobile terminal 2a and access node 6a engage in a signalling dialogue to set up a signalling channel (procedure 120). Initially, authentication data is exchanged to enable the earth station node 6a to determined, based on security information from the database station 15, whether the SIM 35 is that of a genuine user. The details are not germane to the present invention, but briefly, mobile terminal 2a transmits a request message on a random access channel (equivalent to the RACH of GSM) containing data sufficient for the network to decide on an appropriate action (such as data identifying the mobile terminal 2a, and data identifying the beam which the mobile terminal 2a has been monitoring, and measured parameters for each such beam).

On receipt of a valid access request message of this type, the access node 6a determines whether service is possible on any of the cells identified in the access message, and if so, signals back an allocated control channel identification message, indicating the cell (i.e. beam) and channel (i.e. frequency and time slot) equivalent to the stand-alone dedicated control channel (SDCCH) of the GSM system.

### SMS Message

In the case of an SMS message, the message is then transmitted on the signalling channel thus established (step 160). At the mobile terminal, the SMS message is received via the modem 32 and signal control circuit 37, and stored in the memory of the subscriber identity module 35. It may then displayed on the display 39, depending on the preference of the user.

Next, in step 200, the radio resource signalling channel is released, by exchange of handshaking signal. Thereafter, the mobile terminal 2a ceases to monitor the allocated control channels, but returns to idle mode, in which broadcast channels are monitored, as discussed in greater detail below.

### Voice/data call

The procedure where a voice or data (e.g. fax) call is to be placed from a telephone station 12b or mobile terminal 2b is initiated in the same way; namely, a switching centre such as the gateway 8b routes the call to the ground network 14 via a local satellite access node 6b, which interrogates the database station 15, as before, to determine the appropriate earth station 6a to which the call is routed.

As before, in steps 100-120, the mobile terminal 2a is paged and a signalling channel is set up between the mobile terminal and the Earth station node 6a.

In step 140, a traffic channel (equivalent to the TCH of GSM systems) is set up, consisting of a predetermined time slot on a predetermined frequency, the identities of which are signalled on the signalling channel to the mobile terminal 2a.

Voice and/or data traffic is then communicated on the traffic channel during the call (step 160).

The traffic channel is transmitted at a nominal penetration (NP) level from the satellite 4a, and thus cannot necessarily be received by a mobile terminal comprising a handset 2a unless the antenna 31 is fully extended, oriented upwardly (i.e. generally towards the or each satellite 4) and in an area of uninterrupted visibility of the satellites 4 (out of doors and not overshadowed by buildings).

At the end of the call, when the user of the mobile terminal 2a terminates the call by pressing an "off" button, in step 180 the mobile terminal 2a transmits a call clear down signal via the satellite 4 to the Earth station node 6a which accordingly releases the allocation of the traffic channel (step 180).

Then, subsequently, the mobile terminal 2a returns to idle mode.

The user will often retract the antenna 31 and replace the mobile terminal in a pocket or briefcase, so that it cannot be expected to operate at NP but only at MP, immediately on pressing the "OFF" button.

Thus far, the operation of the invention corresponds generally to an adaptation to the satellite environment of the terrestrial GSM system, with the addition of the use of multiple penetration levels as discussed above.

### PREFERRED EMBODIMENT

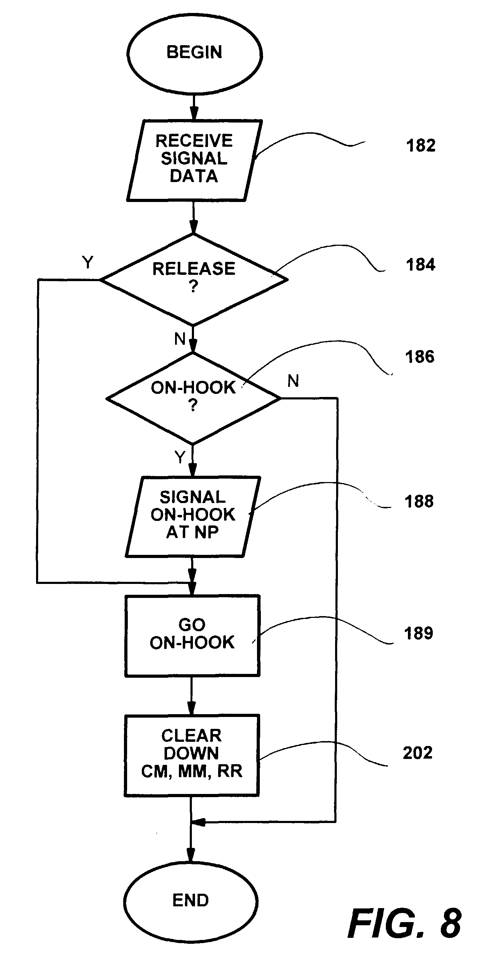

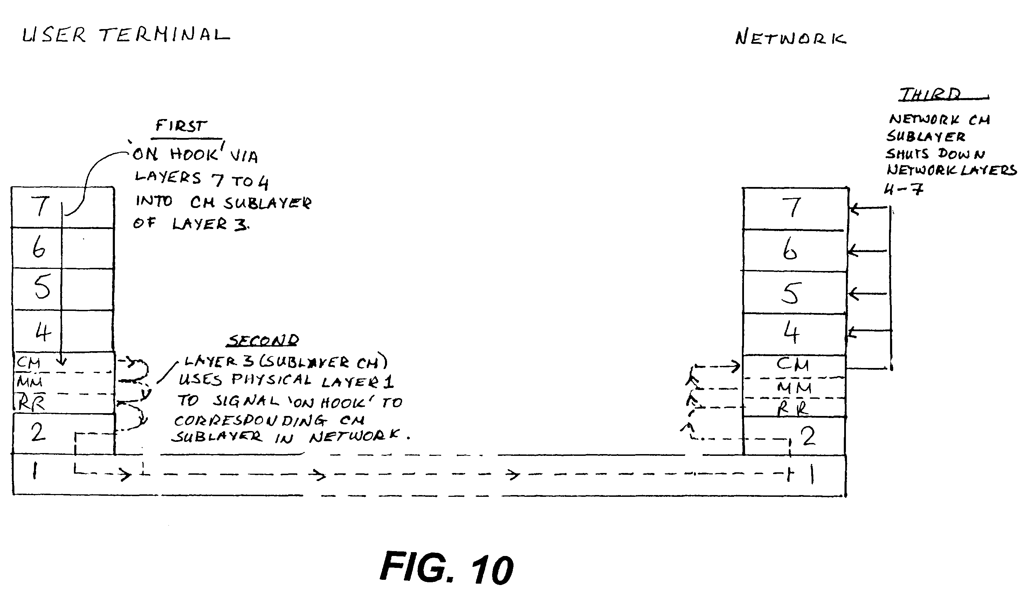

This embodiment of the invention will now be further described with references to Figures 8 to 10.

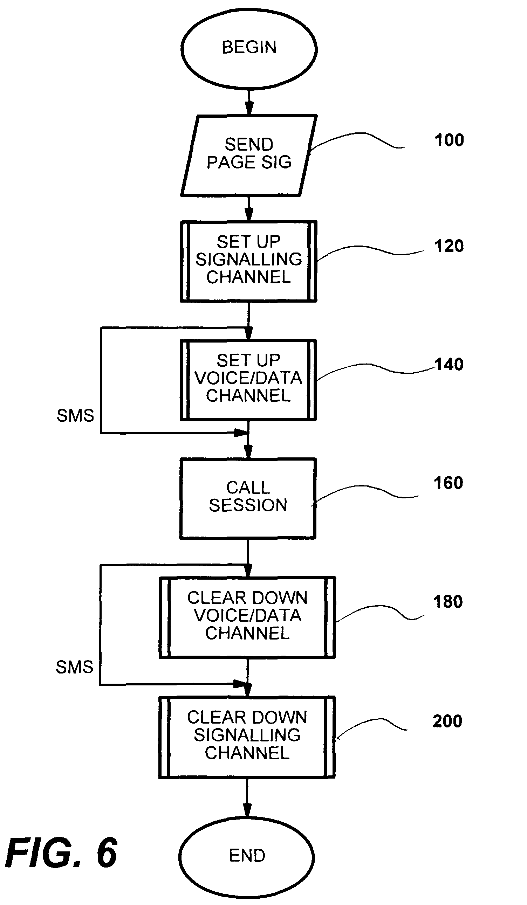

Referring to Figure 8, during progress of a call (block 160 of Figure 6) the mobile terminal receives signalling data on signalling channels, some of which operate at nominal penetration level (those associated with the traffic channel). This is indicated as step 182 of Figure 8.

In step 184, the mobile terminal 2a determines whether, amongst this signalling data, is a "RELEASE" signal from the network. If not, then in step 186, the user terminal 2a detects on-hook action by the user, signalled down through layers 7 to 4 via the user interface (e.g. by the user depressing an "on-hook" button).

The mobile terminal 2a transmits, in response, a DISCONNECT signal on the (nominal penetration) signalling channel associated with the traffic channel, in step 188, and then (or if a RELEASE signal was received in step 184) proceeds to step 189 to invoke a conventional on-hook indication to the user to indicate the end of the call by the upper layers 4 to 7 (e.g. by changing the display 39).

Then, having done so, in step 202, the mobile terminal 2a immediately clears down signalling on the call management, mobility management and radio resource layers, by (amongst other things) ceasing to monitor incoming signals on all signalling channels other than broadcast control and paging channels (BCCH and PCH), terminating current timers and so on. Thus, in step 202, the mobile terminal 2a is returned to idle mode.

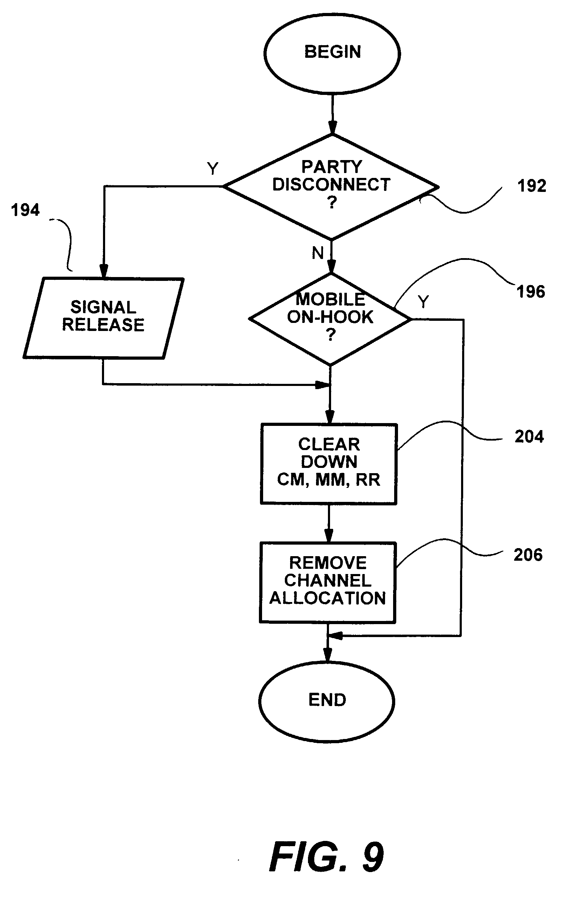

Referring to Figure 9, at the network end, the Earth station node 6a detects, in step 192, any indication that the remote party (e.g. calling from telephone 12b) has disconnected the call. Where such an indication is received in step 192, then (as in a GSM terrestrial radio system) at step 194 the Earth station node 6a signals to the mobile terminal 2a by sending a RELEASE signal (at nominal penetration) on a control channel associated with the traffic channel currently allocated.

If no disconnect is received from the remote party, in step 196 the Earth station node 6a determines whether the mobile had gone on-hook, by detecting the DISCONNECT signal transmitted by the mobile terminal 2a as described above in relation to step 188.

After either step 194 or step 196, the Earth station node 6a clears down the call management, mobility management and radio resource sublayers immediately in step 204, by ceasing to monitor the currently allocated traffic and signalling channels and clearing all running timers, and in step 206 the Earth station node 6a amends its database records to remove the allocation of signalling in data channels to the mobile terminal 2a, thus freeing those channels for subsequent assignment immediately. At the same time, billing and other data is signalled to the database station 15, and originating switches 6 or 8, in a manner not germane to the present invention.

Thus, according to this embodiment, rather than going through a lengthy signalling dialogue to shut down each layer and sublayer hierarchically in turn, with each signal needing to travel tens of thousands of miles through space before the next can be generated, both the mobile terminal and the network take immediate steps to clear down all traffic and signalling channels when the call is terminated.

Furthermore, since cleardown of signalling channels is no longer dependent upon exchange of signals at nominal penetration (which may simply not be received after a user has lost interest in the call) call cleardown is performed positively, rather than relying on cumulative time outs.

As a result of both of these factors, it is anticipated that call cleardown can be performed of the order of 15 seconds or more sooner than would be possible than using a direct adaptation of GSM protocols for satellite communication, thus saving power at the user terminal, and power and bandwidth at the satellite, and hence increasing the lifetime of the former and the capacity of the latter.

Although in the foregoing, immediate termination of all lower signalling levels has been discussed, it would be possible merely to terminate those signalling levels which require nominal penetration at each side, and then trigger the remaining signalling layers (i.e. radio resource signalling) to initiate terminating themselves by signalling.

In this way, a cleardown based entirely on timers is still avoided, so that there is still a significant reduction in the length of time taken to clear down a call where multiple penetration levels are used.

### OTHER EMBODIMENTS

It will be clear from the foregoing that the above described embodiment is merely one way of putting the invention into effect. Many other alternatives will be apparent to the skilled person and are within the scope of the present invention.

For example, the numbers of satellites and satellite orbits indicated are purely exemplary. Smaller numbers of geostationary satellites, or satellites in higher altitude orbits, could be used; or larger numbers of low earth orbit (LEO) satellites could be used. Equally, different numbers of satellites in intermediate orbits could be used.

Although TDMA has been mentioned as a suitable access protocol, the present invention is fully applicable to other access protocols, such as code division multiple access (CDMA) or frequency division multiple access (FDMA) or even single channel per carrier (SCPC).

Equally, whilst the principles of the present invention are envisaged above as being applied to satellite communication systems, the possibility of the extension of the invention to other communications systems (e.g. digital terrestrial cellular systems such as GSM) is not excluded.

Although, for the sake of convenience, the term "mobile" has been used in the foregoing description to denote the terminals 2, it should be understood that it is possible to practice the invention with some of the terminals 2 being completely immobile. References to mobile user terminals will be understood to include hand-held terminals, vehicle-mounted terminals including aeronautical and marine terminals, and temporary or permanent installations such as wireless telephone booths or stations or telephone networks connected to a wireless communications link.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of mobile communications between a mobile terminal end and a network end, in which a call is provided over a traffic channel and call signalling is provided over at least one signalling channel; characterised in that after one said end of the call generates a call termination signal to close said traffic channel, it immediately terminates its connection to said signalling channel.

2. A method according to claim 1, in which said traffic channel utilises a first, relatively low, penetration level.

3. A method according to claim 1 or claim 2, in which the signalling channel carries call management signals, mobility management signals and radio resource signals originating from respective protocol layers at each end, and the mobility management signals and radio resource layer connections are terminated immediately on termination of said call.

4. The method of any preceding claim, in which the signalling takes place via a satellite link.

5. A mobile terminal for use in a network in which a call is provided over a traffic channel and call signalling is provided over at least one signalling channel; characterised in that when the terminal user terminates the call, said traffic channel and said signalling channel are terminated substantially together, without subsequent cleardown signalling.

6. A terminal according to claim 5, in which on receipt of a call termination signal from said network, said mobile terminal is arranged to terminate said traffic channel and said signalling channel substantially together, without subsequent cleardown signalling.

7. The terminal of claim 5 or claim 6, said terminal being adapted to communicate with a satellite.
